# EUROPEAN PATENT SPECIFICATION

(11) **EP 1 044 233 B1**
(45) Date of publication and mention of the grant of the patent: **08.06.2005**
(21) Application number: 98962702.1
(22) Date of filing: 23.12.1998
(51) Int. Cl.: C08G 63/185, C08G 63/189

(54) **COPOLYESTER OBJECT**
COPOLYESTER OBJEKT
OBJET EN COPOLYESTHER

(30) Priority: 30.12.1997 NL 1007934
(43) Date of publication of application: 18.10.2000
(73) Proprietor: DSM IP Assets B.V., 6411 TE Heerlen (NL)
(72) Inventor: STEFFANIE, Leonardus, Gerardus, NL-6116 BN Susteren (NL)
(74) Representative: Krijgsman, Willem
(86) International application number: PCT/NL1998/000730
(87) International publication number: WO 1999/033898

(56) References cited:
- WO-A-93/02122
- DE-A- 4 328 029

## Description

The invention relates to an object shaped in the melt from a copolyester composition containing monomer units derived from 2,6-naphthalenedicarboxylic acid, 4,4'-diphenyldicarboxylic acid and ethylene glycol and optionally less than 50 mole% of the total amount of diacids of one or more other diacids.

Such an object is known from WO 93/02122, in which high-modulus fibres and films and a high-strength monofilament are disclosed. For the purpose of the invention, the aforementioned objects, which are characterized by at least one dimension of a minimal size, often < 100 µm and which are shaped by applying a force in one direction or forces in 2 directions to the melt outside a fixed mould, are not covered by the definition of objects shaped in the melt, which are understood to be objects whose sizes cover considerable distances in 3 dimensions, for example greater than at least 0.2 mm, preferably at least 0.5 mm, even more preferably at least 2 mm. The upper limit of the sizes is determined predominantly by the technical feasibilities of the moulding equipment and may amount to up to the order of 1 metre.

Examples of moulding techniques for producing objects that are shaped in the melt are injection moulding, rotational moulding, extrusion, optionally followed by blow moulding, etc. In Example 31 of WO 93/02122 such a 3-dimensional object is obtained through injection moulding. However, unlike the fibres and films disclosed in the other examples, having properties comparable with fibres and films obtained from liquid crystalline polyester, the objects of Example 31 have inferior properties. Only a slightly higher tensile modulus, approx. 50%, relative to isotropic polyethylene terephthalate, PET, is obtained; the other mechanical properties are of the same order or inferior relative to PET. Unlike fibres and films, a properties pattern comparable with liquid crystalline polyester is not present, not even in a thin (0.32 mm) test plate. This is indeed to be expected because no crystalline areas, which are characteristic of liquid crystalline polyesters, can be demonstrated with polarized light in a melted copolyester composition of WO 93/02122.

The inventors have, however, most surprisingly succeeded in obtaining objects shaped in the melt from chemical compositions of the copolyester WO 93/02122 with mechanical properties that are superior to those of the usual isotropic thermoplastic polyesters and approximate the mechanical properties of liquid crystalline polyester objects.

The object shaped in the melt from a copolyester composition containing monomer units derived from ethylene glycol and 2,6-naphthalenedicarboxylic acid, (NDC), 4,4'-diphenyldicarboxylic acid, (BB), and optionally less than 50 mole% of the total amount of diacids of one or more other diacids according to the invention is characterized in that the relative viscosity of the copolyester in the object, measured in a solution of 1 gram of copolyester in 125 grams of a trichlorophenol/phenol (7:10 parts by weight) mixture at 25°C, is at least 1.9.

A particular advantage of the object according to the invention is that it does not show the weak weld line characteristic of objects obtained from liquid crystalline copolyesters.

The chemical composition of the copolyester for the object to be shaped from the melt according to the invention is described in detail in WO-93/02122 and consists predominantly of units derived from ethylene glycol, 4,4'-bisphenyldicarboxylic acid and 2,6-naphthalenedicarboxylic acid. Minor amounts, i.e. less than 50 mole%, of units derived from one or more other dicarboxylic acids, for example terephthalic or isophthalic acid, or glycols may optionally be present.

The ratio of the amounts of units derived from bisphenyldicarboxylic acid and from naphthalenedicarboxylic acid may vary within a wide range; preferably it is at least 1:3 and at most 4:1. At values below 1:3 the melting point is low and the mechanical properties of the object shaped in the melt are improved to a limited extent only; at a ratio greater than about 4:1 the melting point becomes so high that moulding with the usual processing techniques causes problems, partly as a result of accelerated polymer decomposition.

Preferably the ratio of the dicarboxylic acids is chosen so that the melting point of the copolyesters lies between 260 and 320°C, most preferably between 270 and 315°C.

The copolyester can be obtained using the process described in WO-93/02122 in a 2-step process in which first a low-molecular prepolymer is formed in a polymerization in the melt at 200-240°C starting from the monomers in an inert gas atmosphere and in the presence of a reesterification catalyst. After 2 to 3 hours this prepolymerization is followed by a polycondensation reaction at a temperature between 220 and 290°C, preferably under reduced pressure, in the presence of a polycondensation catalyst.

The product obtained is then further condensed in the solid phase at a temperature between 220 and 270°C in an inert gas atmosphere or in a vacuum until the relative viscosity is at least 1.9. As chain scission often occurs in processing, the relative viscosity of the copolyester must hence in practice amount to at least 1.9, preferably approx. 2.0, for processing purposes. To obtain such a relative viscosity, an post-condensation time of at least 2 hours at 250°C is necessary, depending on the end group balance and the post-condensation conditions, e.g. the temperature. In general this time is 10-20 hours at 225°C.

The copolyester composition that can be used for the products and the articles according to the invention may also contain the usual additives, for example fillers, for example mineral fillers such as chalk, clay, mica, reinforcing fibres, for example mineral fibres, for example between 5 and 50 wt.% glass fibres, and carbon fibres, flame-retardant additives, for example halogenated organic compounds, phosphorus-containing compounds, nitrogen-containing compounds and metal oxides or salts, processing aids, for example mould-release agents, stabilizers to prevent for example thermal decomposition and photodecomposition, substances that influence the electrical properties and optionally other polymers, for example polymers that improve the impact resistance.

The articles according to the invention can in particular be used in the following fields. Electric and electronic parts for so-called surface mounting techniques (SMT) in which very high temperatures have to be endured during assembly. Multiple connectors, e.g. SIMMS connectors, in which very good flow behaviour is desired for production and a great strength and dimensional stability in the product. In aircraft construction, where a great strength at a low weight is an important factor, but reliability is also a prerequisite, which because of the absence of weak weld lines gives the objects according to the invention a major advantage over objects produced using conventional liquid crystalline polyester. Another application is that in loudspeaker cones. The particularly good thermooxidative stability and high continuous use temperature (CUT) of approx. 185°C and a high heat distortion temperature, HDT = 250°C, make the objects according to the invention particularly suitable for use in car parts.

The invention will now be further elucidated with reference to the following examples; without however being limited thereto.
Copolyester: Copolyester was prepared in the manner described in WO 93/02122. The composition and the after-condensation times were varied.
Relative viscosity: The relative viscosity was determined using a solution of 1 gram of copolyester in 125 grams of a trichlorophenol/phenol (TCP:P = 7:10 parts by weight) mixture at 25°C. It was decided to use this method because the higher molecular copolyesters could not be measured with the method for the determination of the relative viscosity in WO 93/02122 because they did not dissolve sufficiently.
Figure 1 shows the relation between the intrinsic viscosity measured according to the method of WO 93/02122 and the relative viscosity according to the method indicated above.

### Example I

Copolyester was prepared using as a starting material a mixture of ethylene glycol, 4,4'-diphenyldicarboxylic acid and 2,6-naphthalenedicarboxylic acid according to the process described in WO 93/02122.
The two dicarboxylic acids were present in equimolar amounts.
The post-condensation was carried out at a reduced pressure of 0.3 kPa and at 2 temperature levels, namely 227.5 and 250°C. The relative viscosity of the granulate obtained was determined in TCP/P after different post-condensation times.

The results of the measurements are indicated in Table 1. Copolyesters 1, 2 and 3 were obtained using as a starting material 4,4'-diphenyldicarboxylic acid from different producers. The copolyesters had a melting point of between 280 and 282°C.

**Table 1:**

| Influence of the post-condensation time and temperature on the relative viscosity | | | | | |
|---|---|---|---|---|---|
| T = 225°C | time [hours] | | | | |
| | 0 | 1.25 | 3.25 | 4.25 | |
| copolyester 1 | 1.58 | 1.70 | 2.00 | - | |
| 2 | 1.54 | 1.78 | 2.08 | 2.25 | |
| 3 | 1.58 | 1.70 | 1.82 | 1.95 | |

| T = 250°C | time [hours] | | | | |
|---|---|---|---|---|---|
| | 0 | 0.50 | 1 | 2 | 3 |
| copolyester 1 | 1.58 | 1.70 | 1.75 | 2.10 | 2.45 |

The differences between copolyesters 1, 2 and 3 are probably attributable to differences in the end group balance caused by the different origins of the 4,4'-diphenyldicarboxylic acid.

### Example II

Copolyester 4 was synthesized using as a starting material ethylene glycol and naphthalenedicarboxylic acid/diphenyldicarboxylic acid, 45/55 mole ratio. The copolyester obtained was post-condensed at different temperatures and for different times. The relative viscosity and the melt viscosity, expressed as the melt flow index, MFI [g/10 min.], of the different products were measured at 310°C according to ISO-1133.

**Table 2:**

| Influence of temperature and duration of the after-condensation on the relative viscosity and melt viscosity of copolyester 4 | | | | | | |
|---|---|---|---|---|---|---|
| T = 225°/time | 0 | 6 | 16 | 24 | 48 | [hours] |
| ηᵣₑₗ | 1.62 | 1.82 | 2.01 | 2.24 | 2.32 | |
| MFI [g/10 min.] | 37.9 | 10.55 | 4.41 | 2.53 | 2.51 | |

| T = 250°/time | 0 | 2 | 4 | 6 | | [hours] |
|---|---|---|---|---|---|---|
| ηᵣₑₗ | 1.62 | 1.96 | 2.11 | 2.38 | | |
| MFI [g/10 min.] | 37.9 | 7.46 | 3.81 | 2.07 | | |

| T = 237°/time | 0 | 16 | 48 | | | [hours] |
|---|---|---|---|---|---|---|
| ηᵣₑₗ | 1.62 | 2.28 | 3.08 | | | |

### Example III: Testing of tensile strength

Test plates measuring 80x40 mm and having different thicknesses varying from 0.5 to 4 mm (so-called UL plates) were injection-moulded from the copolyesters of Examples I and II. Tensile test bars (ISO 527-0,5) for tensile tests were milled from these plates (type 2). In addition, tensile test bars (ISO 527-0,5) varying in thickness from between 0.75 and 3 mm were directly injection-moulded (type 1).
In general a mould temperature of 80°C, a melt temperature of 300-310°C, an injection rate of 12-14 cm³/sec. and a mould holding pressure of 600 bar were used.
Deviating injection-moulding conditions are mentioned separately where relevant.
Table 3 shows the results of tensile tests using the different types of tensile test bars for different materials.
Table 3: From the properties shown in this table it is very clear that test bars made from post-condensed copolyester 4 with ηᵣₑₗ > 2.0 showed substantially better properties than from non-post-condensed copolyester 4 with ηᵣₑₗ = 1.62 and a much higher MFI. In particular the tensile strength of bars made from the post-condensed compositions is higher and, like the tensile modulus, reaches the level of the corresponding liquid crystalline polyesters Vectra A950® and Vectra A130®, respectively, from Hoechst Celanese.

Microscopic examination of the post-condensed polyester, however, gives no indication of the existence of microcrystalline areas in the melt phase.

The copolyester of Example 31 in WO 93/02122 in tensile test bars with a thickness of 3 mm shows a tensile strength of 45 MPa and a modulus of 3860 MPa, which is much lower than of the post-condensed copolyester 4 with ηᵣₑₗ > 2.0.

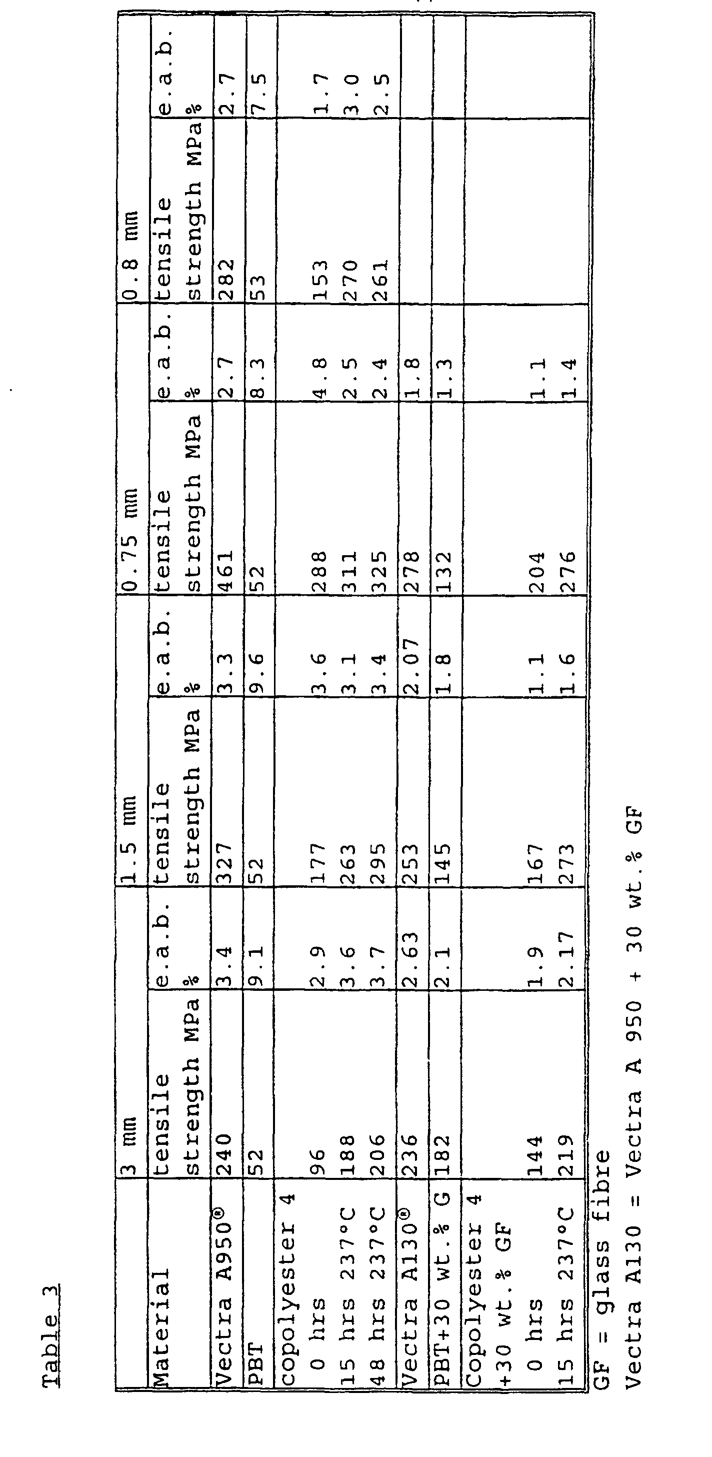

### Example IV

Determination of the flexural strength of tensile test bars made from several copolyester compositions containing 30 wt.% glass fibre.

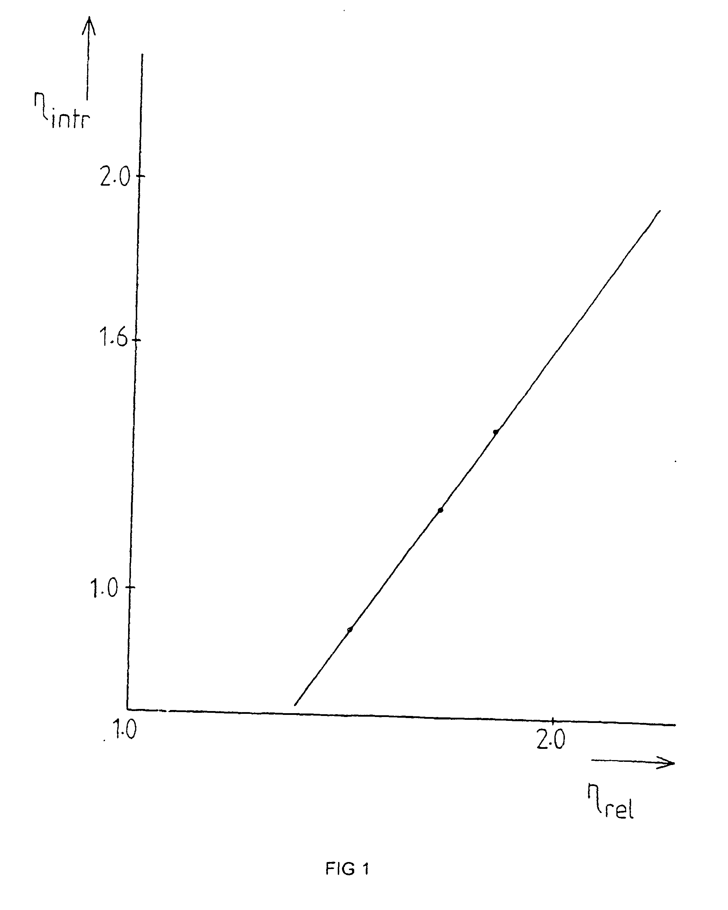

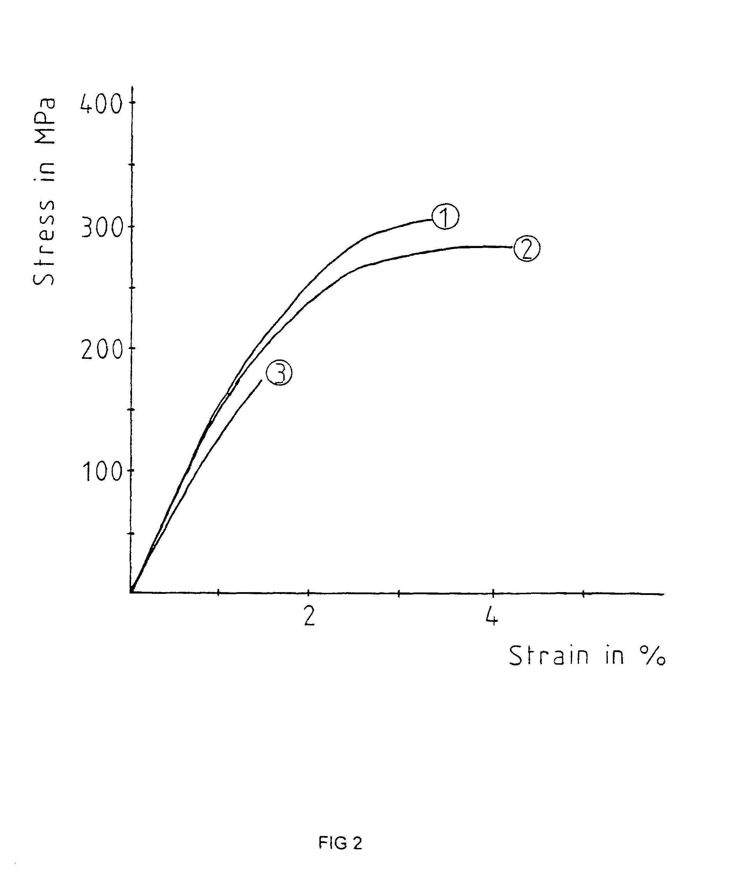

The flexural strength and flexural modulus were determined with the aid of the flexural test with 3-point loading. The results are shown in Fig. 2, which presents the flexural stress as a function of the strain.
- curve 1:: Vectra A130®
- curve 2:: Copolyester 4 + 30% glass fibre post-condensed for 15 hours
- curve 3:: Copolyester 4 + 30% glass fibre not post-condensed.

It is remarkable to note the dramatic increase in the flexural strength of the test bars made from the post-condensed product with ηᵣₑₗ ≈ 2.6, relative to that from the lower-molecular. The test bar according to the invention also proves to be capable of undergoing greater deformation than the test bar obtained from the liquid crystalline polymer. The test bars according to the invention moreover have a much smoother surface than those obtained using the liquid crystalline material.

### Example V

The heat distortion temperature, HDT-A, of copolyester 1 after 2 hours' post-condensation at 250°C was determined, and also that of copolyester 1 with 30% glass fibre after 12 hours at 227.5°C (ηᵣₑₗ = 2.27).

The HDT-A values of injection-moulded test bars were 250 and 255°C, respectively. These values are surprisingly high and differ only little from one another. The HDT-A of a commercial liquid crystalline polyester Vectra A950® is only 170-180°C according to the product brochure and that of type A130® reinforced with 30% glass fibre 230°C.

### Example VI

So-called Campus test bars, with a thickness of 4 mm, were injection-moulded in 2 ways. In the first method the bars were injected via one gate and in the second method the bars were injected via two gates, which led to the formation of a weld line in the middle of the bar. The tensile strength of the different types of bars was determined for glass-fibre-reinforced (30 wt.%) liquid crystalline polyester, (Vectra A130), an isotropic polyester (PET +30% GF) and copolyester 1 + 30% GF. The following table shows the tensile strength of the weld line, expressed as a fraction of the tensile strength of test bars injected via one sprue, (thus without weld line), of the different compositions.

| | |
|---|---|
| Liquid crystalline | 10-20% |
| PET | 45-50% |
| Copolyester 1 | 40-50% |

### Example VII

In another experiment the Izod notched impact resistance according to ISO 180/1A of a series of test bars of copolyester 4 was measured at different degrees of polymerization, (post-condensation times: 0, 16, 42 and 65 hours, respectively, at 240°). The measured Izod values were: 12.9, 24.9, 36.9 and 48.9 KJ/m². The substantial influence of the degree of polymerization on the mechanical behaviour is again observable.

### Example VIII

Copolyester 1 with 30% glass fibre was post-condensed for different times. The relative viscosity of the post-condensed granules was determined. Next, test bars were injection-moulded from these granules at an injection temperature of about 320-325°C. The relative viscosity of the test bars was again determined. The results are shown in the following table.

| | | | | |
|---|---|---|---|---|
| rel. visc. of granules | 1.53 | 1.86 | 2.03 | 2.27 |
| rel. visc. of bars | 1.65 | 1.77 | 1.91 | 2.16 |

This experiment shows that in general one has to start from granules with a higher molecular weight than that which one wants to realize in the moulded object.

### Example IX

Comparison mechanical properties of a connector produced from the melt of a composition according to the invention, with a commercial liquid crystalline polyester and polybutylene terephtalate which are marketed for application in connectors.
- Materials:: Copolyester 45/55 = NDC/BB 30% glassfibre. Vectra A 130®
ARNITE®TV2 260SNF 30% glassfibre reinforced PBT

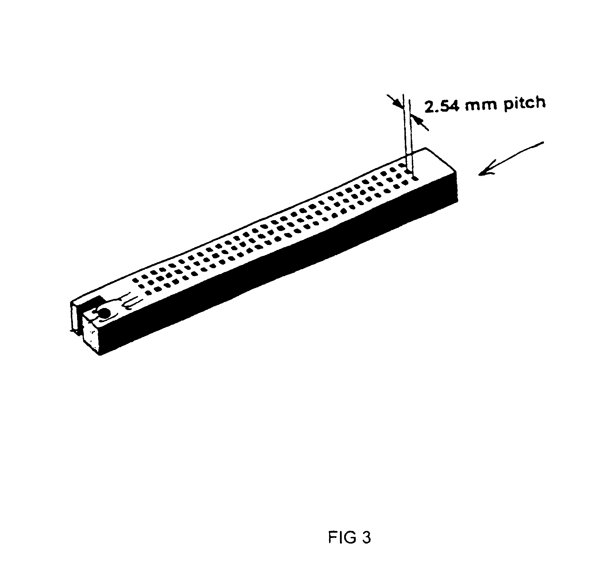

Connectors with the dimensions as given in figure 3 were injection moulded for testing on a Arburg 4 injection moulding machine.
pitch (discance between pins) = 2.54 mm
length = 100 mm height = 8 mm
width = 9 mm
bottom thickness 2.5 mm; wall thickness 1.0 mm

### Moulding conditions:

- temperature setting :: 295 - 305°C
- melt temperature :: 313°C
- mould temperature :: 90°C
- injection speed :: 35 mm/sec (medium) or 120 mm/sec (high) speed
- injection time :: 1,70 sec (resp. 0,42 sec)
- cycle time :: 30 sec (resp. 29 sec)

The following properties have been tested.
Mould shrinkage
end wall strength
screwlock strength (weld line strength)

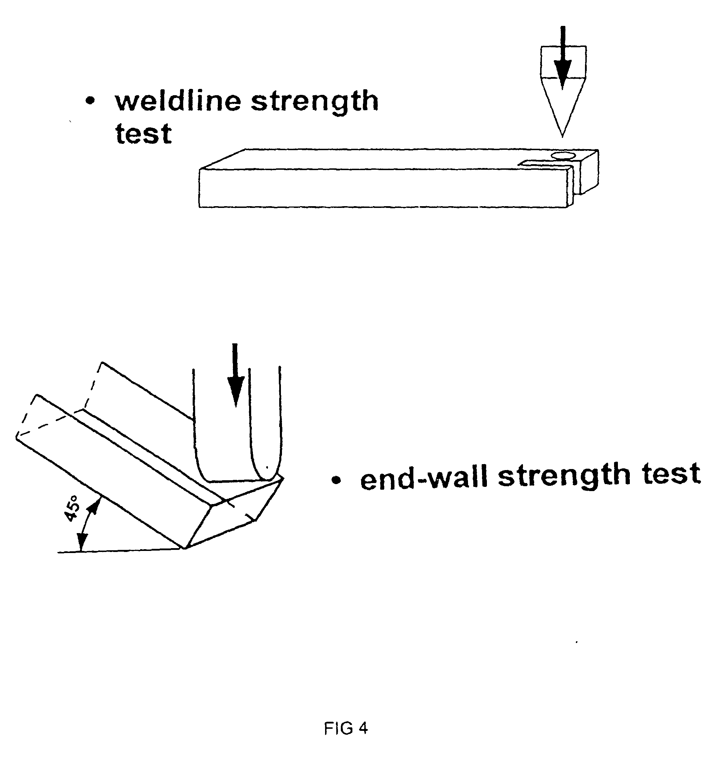

These tests are schematically represented in figure 4.

### Results:

| | copolyester | | | |
|---|---|---|---|---|
| | highspeed | medium speed | A130 high | 260 SNF high |
| end wall strength [N] | 219 | 160 | 165 | 114 |
| end wall deformation [mm] | 2,7 | 2,3 | | 1,2 |
| screwlock strength [N] | 115 | 98 | | 139 |
| mould shrinkage % | 0.125 | 0.125 | 0.05 | 0.3 |

These results show that in injection moulded connectors the copolyester according to the invention introduces mechanical properties of the level comparable with liquid crystalline polyester and far superior over those of polybutylene terephtalate.

In soldering tests the connector according to the invention did not show deformation and retained its pin insertion properties.

### Example X

In a further experiment a copolyester in which the ration NDC/BB = 60:40 was synthesised in the same manner as in Example I and solid state postcondensed. Reinforced with 30 wt% glassfibre the tensile strength of 1.6 mm testbars was 197 MPa, the tensile elongation 2.6% and tensile modulus 15608 MPa. Showing also very improved properties over glassfibre reinforced PBT.

## Claims

1. Object shaped in the melt from a copolyester composition, the copolyester of which consists of units derived from ethylene glycol and 2,6-naphthalenedicarboxylic acid, 4,4'-diphenyldicarboxylic acid and optionally less than 50 mote% of the total amount of diacids of one or more other diacids, **characterized in that** the relative viscosity of the copolyester in the object, measured using a solution of 1 gram of copolyester in 125 grams of a trichlorophenol/phenol (7:10 parts by weight) mixture at 25°C, is at least 1.9.

2. Object according to claim 1, **characterized in that** the copolyester contains 2,6-naphthalenedicarboxylic acid and 4,4'-diphenyldicarboxylic acid in a ratio such that the melting point lies between 260 and 320°C.

3. Object according to claim1 or 2, wherein in that the object is an electric and electronic part for surface mounting techniques, SMT

4. Object according to any one of the above Claims, **characterized in that** the copolyester composition contains 5 to 50 wt.% glass fibre.

5. Copolyester composition, the copolyester of which consists of units derived from ethylene glycol and 2,6-naphthalenedicarboxylic acid, 4,4'-diphenyldicarboxylic acid and optionally less than 50 mole% of the total amount of diacids of one or more other diacids, **characterized in that** the relative viscosity of the copolyester in the object, measured using a solution of 1 gram of copolyester in 125 grams of a trichlorophenol/phenol (7:10 parts by weight) mixture at 25°C, is at least 1.9.

6. Copolyester composition according to claim 5, wherein the the copolyester contains 2.6-naphthalenedicarboxylic acid and 4,4'-diphenyldicarboxylic acid in a ratio such that the melting point lies between 260 and 320°C.

7. Use of a copolyester composition according to claim 5 or claim 6 for the production of a shaped object.

## Patentansprüche

1. Gegenstand, geformt in der Schmelze aus einer Copolyesterzusammensetzung, wobei der Copolyester aus Einheiten besteht, abgeleitet von Ethylenglykol und 2,6-Naphthalindicarbonsäure, 4,4-Diphenyldicarbonsäure und gegebenenfalls weniger als 50 Mol-% der Gesamtmenge an Disäuren von einer oder mehreren anderen Disäuren, **dadurch gekennzeichnet, daß** die relative Viskosität des Copolyesters in dem Gegenstand, gemessen unter Verwendung einer Lösung von 1 g Copolyester in 125 Gramm eines Trichlorphenol/Phenol (7:10 Gew.-Teile) Gemisches bei 25°C, mindestens 1,9 beträgt.

2. Gegenstand nach Anspruch 1, **dadurch gekennzeichnet, daß** der Copolyester 2,6-Naphthalindicarbonsäure und 4,4'-Diphenyldicarbonsäure in einem derartigen Verhältnis enthält, daß der Schmelzpunkt zwischen 260 und 320°C liegt.

3. Gegenstand nach Anspruch 1 oder 2, **dadurch gekennzeichnet, daß** der Gegenstand ein elektrisches und elektronisches Teil für Oberflächenmontiertechniken, SMT, ist.

4. Gegenstand nach einem der vorhergehenden Ansprüche, **dadurch gekennzeichnet, daß** die Copolyesterzusammensetzung 5 bis 50 Gew.-% Glasfaser enthält.

5. Copolyesterzusammensetzung, wobei der Copolyester aus Einheiten besteht, abgeleitet von Ethylenglykol und 2,6-Naphthalindicarbonsäure, 4,4'-Diphenyldicarbonsäure und gegebenenfalls weniger als 50 Mol-% der Gesamtmengen an Disäuren von einer oder mehreren anderen Disäuren, **dadurch gekennzeichnet, daß** die relative Viskosität des Copolyesters in dem Gegenstand, gemessen unter Verwendung einer Lösung von 1 g Copolyester in 125 g eines Trichlorphenol/Phenol (7:10 Gew.-Teile) Gemisches bei 25°C, mindestens 1,9 beträgt.

6. Copolyesterzusammensetzung nach Anspruch 5, wobei der Copolyester 2,6-Naphthalindicarbonsäure und 4,4'-Diphenyldicarbonsäure in einem derartigen Verhältnis enthält, daß der Schmelzpunkt zwischen 260 und 320°C liegt.

7. Verwendung einer Copolyesterzusammensetzung nach Anspruch 5 oder 6 zur Herstellung eines Formgegenstands.

## Revendications

1. Objet façonné à l'état fondu à partir d'une composition de copolyester dont le copolyester se compose de motifs dérivés d'éthylèneglycol et d'acide 2,6-naphtalènedicarboxylique, d'acide 4,4'-diphényldicarboxylique et éventuellement de moins de 50% en moles de la quantité totale de diacides d'un ou plusieurs autres diacides, **caractérisé en ce que** la viscosité relative du copolyester dans l'objet, mesurée à l'aide d'une solution de 1 gramme du copolyester dans 125 grammes d'un mélange trichlorophénol/phénol (7:10 parties en poids) à 25°C, est au moins de 1,9.

2. Objet selon la revendication 1, **caractérisé en ce que** le copolyester contient de l'acide 2,6-naphtalènedicarboxylique et de l'acide 4,4'-diphényldicarboxylique dans un rapport tel que le point de fusion est compris entre 260°C et 320°C.

3. Objet selon la revendication 1 ou 2, **caractérisé en ce que** l'objet est un composant électrique et électronique pour des techniques de montage en surfaces, SMT.

4. Objet selon l'une quelconque des revendications précédentes, **caractérisé en ce que** la composition de copolyester contient 5% à 50% en poids de fibres de verre.

5. Composition de copolyester dont le copolyester se compose de motifs dérivés d'éthylèneglycol et d'acide 2,6-naphtalènedicarboxylique, d'acide 4,4'-diphényldicarboxylique et éventuellement de moins de 50% en moles de la quantité totale de diacides d'un ou plusieurs autres diacides, **caractérisée en ce que** la viscosité relative du copolyester dans l'objet, mesurée à l'aide d'une solution de 1 gramme du copolyester dans 125 grammes d'un mélange trichlorophénol/phénol (7:10 parties en poids) à 25°C, est au moins de 1,9.

6. Composition de copolyester selon la revendication 5, dans laquelle le copolyester contient de l'acide 2,6-naphtalènedicarboxylique et de l'acide 4,4'-diphényldicarboxylique dans un rapport tel que le point de fusion est compris entre 260°C et 320°C.

7. Utilisation d'une composition de copolyester selon la revendication 5 ou la revendication 6 pour la production d'un objet façonné.
